# EUROPÄISCHE PATENTSCHRIFT

(11) **EP 2 064 047 B1**
(45) Veröffentlichungstag und Bekanntmachung des Hinweises auf die Patenterteilung: **18.11.2009**
(21) Anmeldenummer: 07803371.9
(22) Anmeldetag: 10.09.2007
(51) Int. Cl.: B29C 45/33, F02D 9/10

(54) **VERFAHREN UND SPRITZWERKZEUG ZUR HERSTELLUNG EINES ANSAUGTRAKTES AUS KUNSTSTOFF FÜR VERBRENNUNGSMOTOREN SOWIE HERGESTELLTER ANSAUGTRAKT**
METHOD AND INJECTION MOULD FOR THE PRODUCTION OF AN INTAKE SYSTEM COMPOSED OF PLASTIC FOR INTERNAL COMBUSTION ENGINES AND INTAKE SYSTEM PRODUCED
PROCEDE ET OUTIL D'INJECTION POUR LA FABRICATION D' UN CONDUIT D'ADMISSION EN MATIERE SYNTHETIQUE POUR MOTEURS A COMBUSTION INTERNE ET CONDUIT D'ADMISSION AINSI FABRIQUE

(30) Priorität: 13.09.2006 DE 102006042942
(43) Veröffentlichungstag der Anmeldung: 03.06.2009
(73) Patentinhaber: MAHLE International GmbH, 70376 Stuttgart (DE)
(72) Erfinder: SCHNABEL, Werner, 93055 Regensburg (DE); DEISS, Siegfried, 93099 Mötzing (DE)
(74) Vertreter: Bongen, Renaud & Partner
(86) Internationale Anmeldenummer: PCT/EP2007/059454
(87) Internationale Veröffentlichungsnummer: WO 2008/031786

(56) Entgegenhaltungen:
- DE-A1- 10 142 452
- GB-A- 2 393 218
- JP-A- 2002 310 019
- US-A- 5 715 782

## Beschreibung

Die vorliegende Erfindung betrifft ein Verfahren zur Herstellung eines Ansaugtraktes aus Kunststoff für Verbrennungsmotoren, gemäß dem Oberbegriff des Anspruchs 1.

Die Erfindung betrifft außerdem einen mit Hilfe dieses Verfahrens herstellbaren Ansaugtrakt sowie ein zur Durchführung des Verfahrens geeignetes Spritzwerkzeug.

Wenn ein Ansaugtrakt in einem Stück hergestellt werden soll, tritt die Schwierigkeit auf, dass das Werkzeugteil, d.h. der Schieber bzw. Dorn, zur Ausbildung der Öffnungen in den Ansaugrohren in denen später die Lagerbuchsen eingesetzt werden, sehr lang ist. Dies führt zu Schwierigkeiten bei der Entformung.

Diese Schwierigkeit kann man umgehen, wenn man konisch ausgebildete Dorne einsetzt. Das bedeutet aber, dass die zwei Öffnungen eines Ansaugrohres unterschiedlichen Durchmesser aufweisen und ihre Wandungen abgeschrägt sind. Diese Tatsache steht dem Einbau von Lagerbuchsen für die gemeinsame Welle entgegen.

Aus der DE 101 42 452 A1 ist ein Herstellungsverfahren für ein Drosselklappenstutzengehäuse mit einer einzigen, darin angeordneten Drosselklappe bekannt. Hierbei werden beiderseits eines Spritzwerkzeugs Dorne angeordnet, die gestufte Außendurchmesser aufweisen und die sich für den Spritzvorgang axial aneinander abstützen. Die beiden außenliegenden größeren Stufen erzeugen im Drosselklappenstutzengehäuse Lageröffnungen zur Aufnahme von Lagern. Die innen liegenden kleineren Stufen erzeugen in der Drosselklappe einen Durchgang zur Aufnahme einer Welle, die ihrerseits in den Lagern gelagert werden kann.

Die GB-A-2393218 zeigt den Gegenstand des Oberbegriffs des unabhangigen Patentansprüche 1,3 und 7.

Aufgabe der vorliegenden Erfindung ist es, ein Verfahren zur Herstellung eines Ansaugtraktes aus Kunststoff anzugeben, bei welchem zur Entfernung des Schiebers keine großen Kräfte aufgewendet werden müssen, so dass beim Entformen keine Schwierigkeiten auftreten.

Diese Aufgabe wird bei einem Verfahren der eingangs genannten Art dadurch gelöst, dass das Spritzwerkzeug zur Ausbildung der Öffnungen für die Lager zwei Dorne aufweist, so dass jeder Dorn von einer Seite des Spritzwerkzeugs einschiebbar und herausziehbar ist, dass sich die Enden der Dorne im Spritzwerkzeug gegenseitig abstützen, und dass jeder Dorn derart stufenförmig ausgebildet sind, dass für die weiter außen liegenden Lagerstellen jeweils größere Durchmesser als für die benachbarten innen liegenden Lagerstellen vorgesehen sind.

Bei dem erfindungsgemäßen Verfahren wird der Kernzug von zwei Seiten ausgeführt, so dass keine übermäßig großen Kräfte benötigt werden. Die Dorne sind abgestuft, um sie dicker zu machen, was die Steifigkeit erhöht und wodurch die Entformungsschräge leichter bewältigt werden kann.

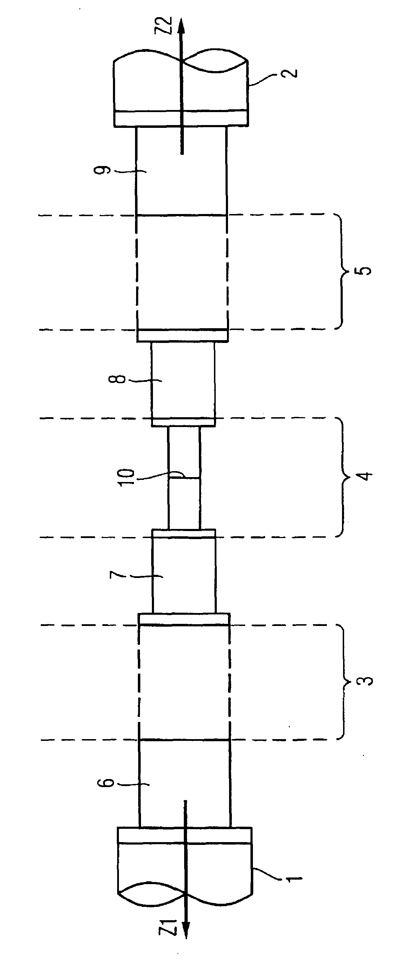

Weitere zweckmäßige Ausgestaltungen des erfindungsgemäßen Verfahrens bzw. des nach dem erfindungsgemäßen Verfahren hergestellten Ansaugtrakts bzw. des zur Durchführung des Verfahrens verwendbaren Spritzwerkzeugs ergeben sich aus den Unteransprüchen sowie aus der nachfolgenden Beschreibung eines Ausführungsbeispiels zweier erfindungsgemäßer Dorne anhand der beigefügten Figur.

Die Figur ist eine schematische Darstellung zweier Dorne gemäß der vorliegenden Erfindung, wobei lediglich die zum Verständnis der Erfindung notwendigen Einzelheiten dargestellt sind.

Zur Herstellung der Öffnungen in den Ansaugrohren dienen die Dorne 1 und 2, welche sich in der Ebene 10 im Inneren eines im übrigen nicht gezeigten Spritzwerkzeugs gegenseitig axial abstützen.

Mit Z1 und Z2 sind die beiden Zugrichtungen für das Entformen angezeigt.

Die mit 3, 4 und 5 bezeichneten gestrichelten Linien zeigen die Lage von Ansaugrohren, in welchen für Lagerbuchsen entsprechende Öffnungen freizuhalten sind. Im vorliegenden Fall verlaufen drei Ansaugrohre parallel, es ist aber selbstverständlich, dass auch mehr als drei Ansaugrohre zu einem Ansaugtrakt gehören können.

Mit 6, 7, 8 und 9 sind Stufen oder Abschnitte der Dorne 1, 2 bezeichnet, welche zur Ausbildung der entsprechenden Öffnungen in den Ansaugrohren beitragen.

Aus der Figur ist ersichtlich, dass für die beiden äußeren Ansaugrohre links und rechts größere Durchmesser für die Öffnungen gewählt sind als für das mittlere Ansaugrohr.

Durch diese Stufigkeit ergibt sich der Vorteil, dass die Dorne 1, 2 leicht entformt, also beim Entformen leichter herausgezogen werden können. Darüber hinaus bietet bei der richtigen Wahl der Durchmesser der Öffnungen der so hergestellte Ansaugtrakt die Möglichkeit, dass die innen liegenden Lagerbuchsen für das innenliegende Ansaugrohr von der Seite durch die außen liegenden Öffnungen der außen liegenden Ansaugrohre durchgesteckt werden können, um sie in den innen liegenden Öffnungen des inneren Ansaugrohrs zu positionieren.

In die Lagerstellen, d.h. in die Öffnungen in den Seitenwänden der Ansaugrohre, werden die eigentlichen Lagerbuchsen eingebracht, wobei bevorzugt alle Lagerbuchsen den gleichen Innendurchmesser aufweisen. Das Lagermaterial unterscheidet sich von dem Material des Ansaugrohres und besteht aus einem Kunststoffmaterial, welches das Gleiten einer Welle begünstigt. Diese nicht gezeigte Welle ist in den Lagerbuchsen drehbar gelagert. An dieser Welle sind den einzelnen Ansaugrohren zugeordnete Drosselklappen drehfest montiert, so dass durch Drehen der Welle sämtliche Drosselklappen gleichzeitig betätigbar sind. Jedes Ansaugrohr enthält dabei eine eigene Drosselklappe.

Zur Befestigung der Lagerbuchsen gibt es mehrere Möglichkeiten. Bei einer davon werden die Lagerbuchsen in das jeweilige Saugrohr eingeschnappt, was eine Öffnung im Ansaugrohr in Richtung des Zylinderkopfflansches erfordert und zu leichten Undichtigkeiten zwischen den Ansaugrohren führt, da die Lagerbuchsen leicht schwimmend in der Öffnung sitzen müssen, um den Verzug des Ansaugrohres auszugleichen. Die Lager haben einen Anschlag bzw. eine Stufe, welche eine gewisse Abdichtung darstellt.

Eine andere Möglichkeit der Befestigung besteht darin, dass die Lagerbuchsen in das jeweilige Saugrohr mittels Reibschweißen eingebracht werden. Dabei werden die Lagerbuchsen durch ein Werkzeug zentriert, welches der späteren Welle entspricht. Dadurch sind die Lagerstellen auch bei einem verzogenen Saugrohr in Flucht und die Klappenwelle dadurch leicht gängig. Ein weiterer Vorteil ist die Dichtigkeit zwischen den Ansaugrohren, da lediglich eine leichte Undichtigkeit an der Welle besteht, welche sehr gering und berechenbar ist.

Die Lagerbuchsen werden durch Reib- oder Ultraschallschweißen in die Ansaugrohre eingeschweißt. Im Falle des Ultraschallschweißens sind kleine Raupen auf dem Bund der Lagerbuchsen angebracht. Für das Reibschweißen sind rundliche Erhebungen auf dem Außendurchmesser der Lagerbuchsen günstiger. Der Bund an den Lagerbuchsen dient als Anschlag zur Positionierung der Lagerbuchsen und als Träger einer Aufnahmeeinrichtung damit die Lagerbuchsen eingeschweißt werden können.

Nachfolgend sollen hier noch einmal die Vorteile des erfindungsgemäßen Verfahrens dargestellt werden.

Die zwei Dorne sind kurz und werden von zwei Seiten bewegt. Dabei zentrieren sich die Dorne gegenseitig oder sind in dem Kern eines Ansaugrohres zentriert. Dadurch ergeben sich geringe Kräfte beim Entformen. Die Dorne sind abgestuft, um sie dicker machen zu können, was zu einer größeren Steifigkeit führt und wodurch die Entformungsschräge leichter bewältigt werden kann. Durch das Abstufen kann auch ein Bund an die Lagerbuchsen angebracht werden, welcher zur Abdichtung und Positionierung vorteilhaft ist.

Die Lager bestehen aus einem mit dem Ansaugrohr (z.B.
BA6 GF30) zu verschweißenden Material, welches gleichzeitig auch gute Gleiteigenschaften für die Klappenwelle bietet (z.B. PA6 unverstärkt mit PTFE-Anteil). Die Lager haben Einrichtungen zum Einschweißen in das Saugrohr, zum Beispiel keilförmige Erhebungen am Bund zum Einschweißen per Ultraschall- oder Reibschweißen oder kuppenartige Erhebungen am äußeren Durchmesser zum Einschweißen per Reibschweißen.

Die Lager haben am Bund eine Eingriffsmöglichkeit für das Reibwerkzeug. Das können Vertiefungen oder Erhebungen sein.

## Patentansprüche

1. Verfahren zur Herstellung eines mehrere parallel verlaufende Ansaugrohre und in den Ansaugrohren angeordnete, über eine gemeinsame, von in Saugrohrwandungen befindlichen Lagern abgestützte Welle betätigte Drosselklappen aufweisenden Ansaugtraktes aus Kunststoff für Verbrennungsmotoren, bei dem ein Spritzwerkzeug verwendet wird,
**dadurch gekennzeichnet,**
- **dass** zwei Dorne (1, 2) des Spritzwerkzeugs zur Ausbildung von Öffnungen für die Lager jeweils von einer Seite des Spritzwerkzeugs so eingeschoben werden, dass sich Enden der Dorne (1, 2) im Spritzwerkzeug gegenseitig abstützen,
- **dass** die weiter außen liegenden Öffnungen jeweils mit größerem Durchmesser als die benachbarten innen liegenden Öffnungen **dadurch** hergestellt werden, dass jeder Dorn (1, 2) stufenförmig ausgebildet ist,
- **dass** die Dorne (1, 2) beim Entformen an den beiden Seiten des Spritzwerkzeugs herausgezogen werden.

2. Verfahren nach Anspruch 1,
**dadurch gekennzeichnet,**
**dass** die Durchmesser für die Öffnungen so gewählt sind, das innen liegende Lagerbuchsen jeweils durch die weiter außen liegenden Öffnungen hindurch einsetzbar sind.

3. Ansaugtrakt aus Kunststoff für Verbrennungsmotoren, bei welchem mehrere Ansaugrohre parallel verlaufen und bei welchem sich in den Ansaugrohren Drosselklappen befinden, welche über eine gemeinsame Welle betätigbar sind, wobei die Welle von in Saugrohrwandungen befindlichen Lagern abgestützt ist,
**dadurch gekennzeichnet,**
**dass** weiter außen liegende Öffnungen für die Lager jeweils einen größeren Durchmesser aufweisen als benachbarte, innenliegende Öffnungen für die Lager.

4. Ansaugtrakt nach Anspruch 3,
**dadurch gekennzeichnet,**
**dass** die Durchmesser für die Öffnungen so gewählt sind, dass innen liegende Lagerbuchsen jeweils durch die weiter außen liegenden Öffnungen einsetzbar sind.

5. Ansaugtrakt nach Anspruch 3 oder 4,
**dadurch gekennzeichnet,**
**dass** alle Lagerbuchsen den gleichen Innendurchmesser besitzen.

6. Ansaugtrakt nach einem der Ansprüche 3 bis 5,
**dadurch gekennzeichnet,**
**dass** das Material von Lagerbuchsen ein anderes Material ist als das des Ansaugrohrs und aus einem Kunststoffmaterial besteht, welches das Gleiten der Welle begünstigt.

7. Spritzwerkzeug zur Herstellung eines mehrere parallel verlaufende Ansaugrohre und in den Ansaugrohren angeordnete, über eine gemeinsame, von in Saugrohrwandungen befindlichen Lagern abgestützte Welle betätigte Drosselklappen aufweisenden Ansaugtrakts aus Kunststoff für Verbrennungsmotoren,
**dadurch gekennzeichnet,**
- **dass** das Spritzwerkzeug zur Ausbildung von Öffnungen für die Lager zwei Dorne aufweist, derart, dass zum einen jeder Dorn (1, 2) jeweils von einer Seite des Spritzwerkzeugs einschiebbar und herausziehbar ist und dass sich andererseits die Enden der Dorne (1, 2) im Spritzwerkzeug gegenseitig abstützen,
- **dass** jeder Dorn stufenförmig ausgebildet ist,
- **dass** für die weiter außenliegenden Öffnungen am jeweiligen Dorn (1, 2) jeweils größere Durchmesser als für die benachbarten innen liegenden Öffnungen vorgesehen sind.

8. Spritzwerkzeug nach Anspruch 7,
**dadurch gekennzeichnet,**
**dass** die Durchmesser für die Öffnungen so gewählt sind, dass innen liegende Lagerbuchsen jeweils durch die weiter außen liegenden Öffnungen einsetzbar sind.

## Claims

1. A method for the production of an intake system which is made of plastic and is intended for an internal combustion engine, which has a plurality of parallel running intake pipes, and which has, arranged in the intake pipes, throttle flaps actuated by means of a common shaft supported in bearings located in the intake pipe walls, wherein for the methods an injection moulding tool is used,
**characterized in**
- **that** two mandrels (1, 2) of the injection moulding tool for forming of apertures for the bearings are inserted respectively from one side of the injection moulding tool in such a manner that the ends of the mandrels (1, 2) mutually support one another within the injection moulding tool,
- **that** the apertures located further outward each are produced with a bigger diameter than the adjacent inwardly located apertures in that each mandrel (1, 2) is formed step-shaped,
- **that** the mandrels (1, 2) during demoulding are pulled out on both sides of the injection moulding tool.

2. The method according to claim 1,
**characterized in**
**that** the diameters for the apertures are selected such that the inwardly located bearing bushes can be inserted respectively through the apertures located further outwards.

3. An intake system made of plastic for internal combustion engines, in which such intake system a plurality of intake pipes run in parallel and in which throttle flaps are located within the intake pipes, which throttle flaps can be actuated by a common shaft, wherein the shaft is supported in bearings located within the intake walls,
**characterized in**
**that** the apertures located further outwards each have a bigger diameter than the adjacent inwardly located apertures for the bearings.

4. The intake system according to claim 3,
**characterized in**
**that** the diameters for the apertures are selected such that the inwardly located bearing bushes can be inserted respectively through the apertures located further outwards.

5. The intake system according to claim 3 or claim 4,
**characterized in**
**that** all bearing bushes have the same inner diameter.

6. The intake system according to any one of the claims 3 to 5,
**characterized in**
**that** the material of the bearing bushes is a different material than the one of the intake pipe and consists of a plastic material which promotes the sliding of the shaft.

7. An injection moulding tool for the production of an intake system which is made of plastic and is intended for an internal combustion engine, which has a plurality of parallel running intake pipes, and which has, arranged in the intake pipes, throttle flaps actuated by means of a common shaft supported in bearings located in the intake pipe walls,
**characterized in**
- **that** the injection moulding tool for forming of apertures for the bearings has two mandrels such that, on the one hand, each mandrel (1, 2) can be inserted and pulled out respectively from one side of the injection moulding tool and that, on the other hand, the ends of the mandrels (1, 2) mutually support one another within the injection moulding tool,
- **that** each mandrel is formed step-shaped,
- **that** for the apertures located further outwards, for the respective mandrel (1, 2), respectively bigger diameters are provided than for the adjacent inwardly located apertures.

8. The injection moulding tool according to claim 7,
**characterized in**
**that** the diameters for the apertures are selected such that inwardly located bearing bushes can be inserted respectively through the apertures located further outwards.

## Revendications

1. Procédé pour la fabrication d'un conduit d'admission en matière plastique pour moteurs à combustion interne présentant plusieurs tuyaux d'admission s'étendant parallèlement et des vannes papillon disposées dans les tuyaux d'admission, actionnées par l'intermédiaire d'un arbre commun, soutenu par les paliers se trouvant dans les parois de tuyaux d'aspiration, dans lequel un outil d'injection est employé,
**caractérisé en ce que**
- deux mandrins (1,2) de l'outil d'injection afin de réaliser des ouvertures destinées aux paliers sont respectivement enchâssés depuis un côté de l'outil d'injection, de telle sorte que les extrémités des mandrins (1,2) s'appuient mutuellement dans l'outil d'injection,
- les ouvertures situées plus à l'extérieur sont respectivement fabriquées avec un diamètre plus grand que les ouvertures voisines situées à l'intérieur, **en ce que** chaque mandrin (1,2) est configuré en forme de gradin,
- les mandrins (1,2) sont retirés lors de la déformation sur les deux côtés de l'outil d' injection.

2. Procédé selon la revendication 1,
**caractérisé en ce que**
les diamètres des ouvertures sont sélectionnés de telle sorte que des coussinets de palier situés à l'intérieur puissent être respectivement installés à travers les ouvertures situées plus à l'extérieur.

3. Conduit d'admission en matière synthétique pour moteurs à combustion interne, dans lequel plusieurs tuyaux d'admission s'étendent parallèlement et dans lequel des vannes papillon se trouvent dans les tuyaux d'admission, lesquelles peuvent être actionnées par l'intermédiaire d'un arbre commun, moyennant quoi l'arbre est soutenu par des paliers se trouvant dans les parois de tuyaux d'aspiration,
**caractérisé en ce que**
les ouvertures destinées aux paliers situées le plus à l'extérieur présentent respectivement un diamètre plus grand que des ouvertures voisines, situées à l'intérieur destinées aux paliers.

4. Conduit d'admission selon la revendication 3,
**caractérisé en ce que**
les diamètres des ouvertures sont sélectionnés de telle sorte que des coussinets de paliers situés à l'intérieur peuvent être respectivement installés à travers les ouvertures situées plus à l'extérieur.

5. Conduit d'admission selon la revendication 3 ou 4,
**caractérisé en ce que**
tous les coussinets de palier possèdent le même diamètre intérieur.

6. Conduit d'admission selon une des revendications 3 à 5,
**caractérisé en ce que**
le matériau des coussinets de palier est un autre matériau que celui du tuyau d'admission et est constitué d'une matière synthétique, qui favorise le glissement de l'arbre.

7. Outil d'injection pour la fabrication d'un conduit d'admission en matière plastique pour moteurs à combustion interne présentant plusieurs tuyaux d'admission s'étendant parallèlement et des vannes paillon disposées dans les tuyaux d'admission, actionnées par l'intermédiaire d'un arbre commun, soutenu par les paliers se trouvant dans les parois de tuyaux d'aspiration,
**caractérisé en ce que**
- l'outil d'injection présente afin de réaliser des ouvertures destinées aux paliers deux mandrins, de telle sorte que d'une part chaque mandrin (1,2) puisse respectivement être enchâssé et retiré par un côté de l'outil d'injection et **en ce que** d'autre part les extrémités des mandrins (1,2) s'appuient mutuellement dans l'outil d'injection,
- chaque mandrin est configuré en forme de gradin,
- pour les ouvertures situées le plus à l'extérieur sur le mandrin respectif (1,2), des diamètres respectivement plus grands que pour les ouvertures voisines situées à l'intérieur sont prévus.

8. Outil d'injection selon la revendication 7,
**caractérisé en ce que**
les diamètres des ouvertures sont sélectionnés de telle sorte que des coussinets de palier situés à l'intérieur puissent être respectivement installés à travers les ouvertures situées le plus à l'extérieur.
